(19) **Europäisches Patentamt / European Patent Office / Office européen des brevets**

(11) **EP 1 595 789 B1**

(12) **EUROPEAN PATENT SPECIFICATION**

(45) Date of publication and mention
of the grant of the patent:
**29.04.2009   Bulletin 2009/18**

(51) Int Cl.:
*B64F 1/28* *(2006.01)*    *B64D 37/14* *(2006.01)*

(21) Application number: **04011515.6**

(22) Date of filing: **14.05.2004**

(54) **Determination and tankering of an optimum amount of extra fuel**

Festlegung und "Tankering" einer optimalen zusätzlichen Treibstoffmenge

Determination et "Tankering" d'une quantité optimale de carburant extra

(84) Designated Contracting States:
**AT BE BG CH CY CZ DE DK EE ES FI FR GB GR HU IE IT LI LU MC NL PL PT RO SE SI SK TR**

(43) Date of publication of application:
**16.11.2005   Bulletin 2005/46**

(73) Proprietor: **Tore Reimers**
**86929 Greifenberg (DE)**

(72) Inventor: **Tore Reimers**
**86929 Greifenberg (DE)**

(74) Representative: **Kramer - Barske - Schmidtchen**
**European Patent Attorneys**
**Landsberger Strasse 300**
**80687 München (DE)**

(56) References cited:
**US-A- 4 159 088**    **US-A- 4 809 174**
**US-B1- 6 484 088**

- **STROUP, JOHN S.; WOLLMER, RICHARD D.: "Fuel management model for the airline industry" OPERATIONS RESEARCH, vol. 40, no. 2, March 1992 (1992-03), - April 1992 (1992-04) pages 229-237, XP009038209**

**Description**

The invention relates to a device, a method, a computer program and a system for determining and tankering an optimum amount of extra fuel for a vehicle, in particular for determining and tankering extra fuel for an aircraft.

Fuel is an important cost factor in transportation enterprises. However, the fuel price is variable and therefore tankering is an obvious way to reduce the fuel cost by uploading extra fuel at cheap locations and reduce the need to purchase fuel at expensive locations. The term "tankering" is for the purpose of this application defined as: "to upload more fuel than what is required for a flight to reduce fuel cost".

In a route network, as operated by for example an airline, fuel upload may for practical reasons only be possible when calling at the nodes of the network. Fuel cost varies with time and between locations.

Further, several physical constrains apply to a vehicle, an aircraft is for example limited by tank capacity, and maximum takeoff and landing weights. The maximum weights may have structural or performance reasons. Performance constraints differ between airports and change with weather conditions (e.g. wind, temperature and pressure).

Further, the fuel usage for the current trip and the fuel needed for the next trip must be kept in mind, there is no use in overtanking the vehicle so that it arrives overweight or with significantly more fuel than what is needed for the next trip.

The tankering decision must typically be made under time pressure considering many input parameters. Since several input parameters will change from day to day a default tankering decision is rendered impossible. Due to the many variables it is difficult to determine whether tankering will be economical for a given trip or not, and in most cases tankering is only done when it is obvious, i.e. with a large price differential and short distance between the network nodes or airports. The opportunity to reduce fuel cost is often lost because there are no proper tools to aid in the decision.

The object of the present application is to provide such a tool that simplifies the tankering decision and allows transportation enterprises to reduce fuel costs by using tankering more efficiently.

This object is achieved by a device according to claim 1, a method according to claim 8, a computer program product according to claim 15 and a system according to claim 16.

Further developments of the invention are given in the dependent claims.

In the following, preferred embodiments of the present invention are described in detail, by way of example only, with reference to the accompanying drawings, in which:

Figure 1 shows a block diagram of a device for determining an optimum amount of extra fuel for tankering a vehicle, such as an aircraft, according to a preferred embodiment of the invention;

Figure 2 shows a flow chart for determining the optimum amount of extra fuel in the device, as shown in Figure 1, according to a preferred embodiment;

Figure 3 shows a system for tankering an optimum amount of extra fuel according to a preferred embodiment;

Figure 4 to 8 show screen shoots output by the device, as shown in Figure 1, for different input parameters;

and Figure 9 shows an example fuel usage lookup table for a Boeing 737-400 aircraft.

In the following detailed description of the present invention, same reference numbers are used for identical or corresponding parts throughout the drawings.

Stroup, John S.; Wollmer, Richard D. "Fuel management model for the airline industry" discusses a linear program formulation model to optimise aircraft fuel load and reduce costs.

US 6,484,088 B1 relates to systems for monitoring the fuel level in a vehicle and discusses land-based transport, where you have a choice when and where you want to refuel, and you will always fill up to full tank.

US 4,159,088 relates to a method and apparatus to minimize the total fuel consumed by an aircraft during a flight.

US 4,809,174 discusses measurement of aviation fuel chemical characteristics.

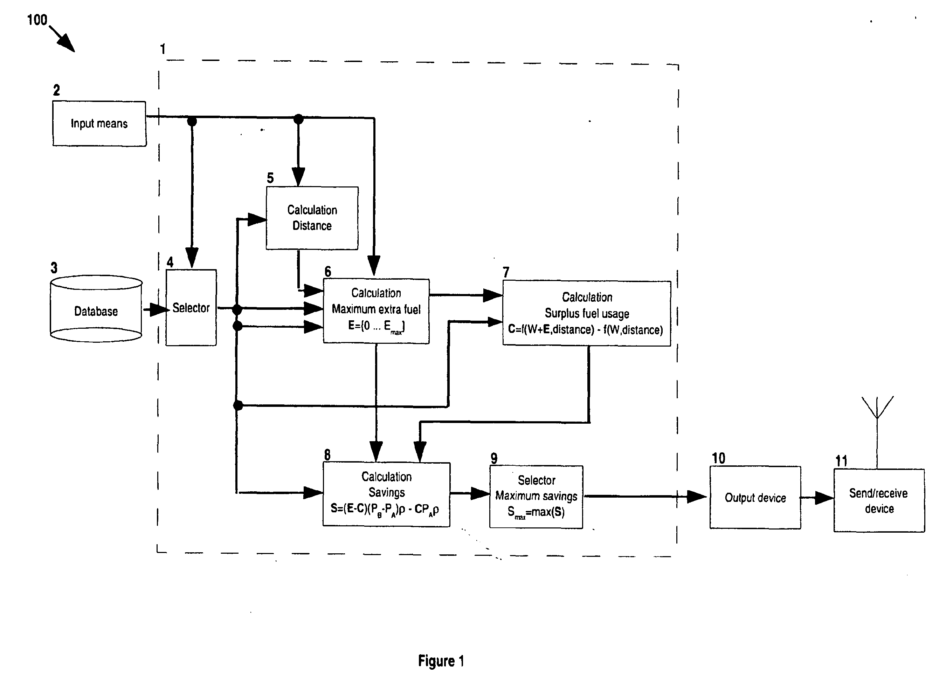

Figure 1 shows a block diagram of a device 100 for determining an optimum amount of extra fuel for tankering an aircraft according to a preferred embodiment.

As shown in Figure 1, the device 100 comprises input means 2 such as a keyboard, a touch screen, a mouse, etc, used for inputing a set of parameters effecting the fuel consumption of an aircraft (not shown in Figure 1).

The device 100 further comprises a database storage means 3 for storing data such as for example navigation data, aircraft limits, fuel usage information, price information, etc. The device 100 also comprises a selector means for selecting the appropriate data stored in the database according to user input on the input means 2.

The parameters input by the input means 2 and navigation data stored in the database means 3 are supplied to a first calculating means 5 for determining the distance and direction from a location A to a location B. The distance may be the direct greatcircle distance calculated from navigation data supplied by the database means, or may be via the input means 2. Wind, drift or other environmental influences on the aircraft may be input by the input means 2, and used by the calculating means 5 to correct the distance. For aircraft use, for example, the ground distance $d_g$ may be corrected to air distance d using wind data and true air speed, or alternatively using wind data and trip time, as input by input means 2.

Position parameters can be supplied by the database means 3 for the departure and destination airports A and B, or may be entered via the input means 2. These parameters are used for determining the direction $\alpha_{AB}$ from A to B and the greatcircle ground distance $d_g$. The location of A and B can be represented by geographical coordinates, in latitude $\Phi_A$ and $\Phi_B$ (degrees from equator; north latitude is positive and south is negative) and in longitude $\Lambda_A$ and $\Lambda_B$ (degrees from the Greenwich meridian; west longitude is positive and east is negative). The locations A and B can thus be represented by the coordinates $(\Phi_A, \Lambda_A)$ and $(\Phi_B, \Lambda_B)$, respectively.

The greatcircle distance in degrees can be calculated by the following formula:

$$\delta = \arccos\left[\sin\Phi_A\sin\Phi_B + \cos\Phi_A\cos\Phi_B\cos(\Lambda_A - \Lambda_B)\right]$$

The greatcircle ground distance in nautical miles can be found by multiplying $\delta$ with 60:

$$d_g = \delta \cdot 60$$

The greatcircle direction from A to B can be calculated by the following formula:

$$\alpha_{AB} = 360 - \text{acos}[(\sin\Phi_B - \sin\Phi_A\cos\delta) / (\cos\Phi_A\sin\delta)] , \qquad \sin(\Lambda_A - \Lambda_B) < 0$$

$$\alpha_{AB} = \text{acos}[(\sin\Phi_B - \sin\Phi_A\cos\delta) / (\cos\Phi_A\sin\delta)] , \qquad \sin(\Lambda_A - \Lambda_B) \geq 0$$

The environmental data comprises for example the average wind direction $\alpha_{Wind}$ and magnitude $v_{Wind}$ for the air mass through which the aircraft travels. The wind component along the direction of travel can be calculated as follows:

$$WC = - v_{Wind} \cdot \cos(\alpha_{AB} - \alpha_{Wind}).$$

The parameter $v_{TAS}$ is indicative for the true air speed, i.e. speed in relation to the air mass through which the aircraft travels.

The air distance parameter d is the greatcircle ground distance $d_g$ corrected for wind as follows:

$$d = d_g \cdot v_{TAS}/(v_{TAS} + WC).$$

As an alternative, the still air trip time $f_t(d)$ can be used to iteratively calculate the air distance as follows, using $d_g$ as initial value for trip time $f_t(d_g)$ and iterating until convergence within a suitable limit value:

$$d = d_g - WC \cdot f_t(d)$$

The corrected distance d from the calculating means 5, limits and fuel usage parameters from the database means 3, and user data from input means 2 are then supplied to the second calculating means 6 in order to determine the maximum extra fuel which can be tankered. The limits can for example be tank capacity and structural maximum takeoff and landing weights. The fuel usage data can by assuming a certain flight profile be represented by a function dependent upon two variables:

$$\text{fuel usage} = f(\text{takeoff weight, distance})$$

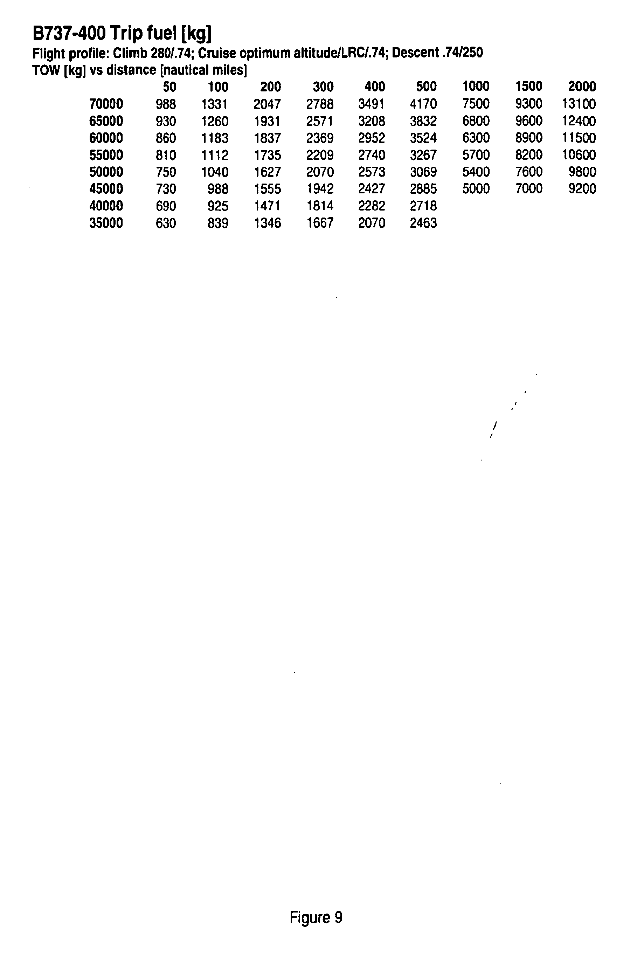

which can be evaluated by interpolating in a lookup table. An example fuel usage lookup table for a Boeing 737-400 aircraft is shown in figure 9. The fuel usage characteristics are individual for each type of aircraft and normally represented in form of a complex diagram in the aircraft manual. The user data from the input means 2 can be maximum takeoff and landing weights which may be performance-related and more restrictive than the aircraft limits from the database means 3, further the zero fuel weight which is the aircraft weight with planned or actual load but without fuel, further the planned block fuel for the current and for the next trip which is the total fuel on board prior to starting engines, and finally the taxi fuel which is the fuel usage from starting engines until starting the takeoff roll.

The maximum extra fuel $E_{max}$ which can be calculated by calculation means 6 may be restricted by several constraints. The maximum extra fuel $E_{max}$ for an aircraft, for example, may be restricted by tank capacity, maximum takeoff weight, maximum landing weight, and the next flight fuel requirement. The most restrictive of the constraints will dictate $E_{max}$.

The tank capacity restriction $E_{tank}$ can be calculated as follows, using tank capacity from the database means 3 and planned block fuel for the current flight from user input means 2:

$$E_{tank} \quad = \quad \text{Tank capacity} - \text{planned block fuel current flight}$$

The planned takeoff weight $W_{takeoff}$ will be reused several times below and can be calculated as follows, using zero fuel weight, planned block fuel current flight and taxi fuel from user input means 2:

$$W_{takeoff} = \quad \text{Zero fuel weight} + \text{planned block fuel current flight} - \text{taxi fuel}$$

Next, the maximum takeoff weight restriction can be calculated as follows, using maximum takeoff weight from the database means 3 or further restricted by user input means 2, and planned takeoff weight $W_{takeoff}$ as calculated above:

$$E_{takeoff} \quad = \quad \text{Maximum takeoff weight} - \text{planned takeoff weight}$$
$$= \quad \text{Maximum takeoff weight} - W_{takeoff}$$

Next, the maximum landing weight restriction can be calculated as follows, using maximum landing weight from the database means 3 or further restricted by user input means 2, planned takeoff weight $W_{takeoff}$ as calculated above, and fuel usage f(takeoff weight, distance) data from the database means 3:

$$E_{land} \quad = \quad \text{Maximum landing weight} - \text{planned landing weight}$$
$$= \quad \text{Maximum landing weight} + \text{fuel usage} - \text{planned takeoff weight}$$
$$= \quad \text{Maximum landing weight} + \text{fuel usage} - W_{takeoff}$$

Now, as discussed above, the fuel usage is dependent upon takeoff weight $W_{takeoff}$ and distance d. Thus, without extra fuel, the fuel usage can be calculated by:

$$\text{fuel usage} = f(W_{\text{takeoff}}, d)$$

However, with maximum extra fuel according to the maximum landing weight restriction, the fuel usage becomes:

$$\text{fuel usage} = f(W_{\text{takeoff}} + E_{\text{land}}, d)$$

Thus, the maximum landing weight restriction must be calculated iteratively using $E_{\text{land}}=0$ as initial value and iterating until convergence within a suitable limit value such as for example 1 kg:

$$E_{\text{land}} = \text{Maximum landing weight} + f(W_{\text{takeoff}} + E_{\text{land}}, d) - W_{\text{takeoff}}$$

Further, the next flight fuel requirement restriction can be calculated as follows, using planned block fuel for the current and next flights from user input means 2, planned takeoff weight $W_{\text{takeoff}}$ as calculated above, and fuel usage $f(\text{takeoff weight, distance})$ from database means 3:

$$E_{\text{next}} = \text{Block fuel next flight} + \text{fuel usage} - \text{block fuel current flight}$$

$$= \text{Block fuel next flight} + f(W_{\text{takeoff}}, d) - \text{block fuel current flight}$$

Again, similar to the discussion on the maximum landing weight restriction above, the fuel usage is dependent upon takeoff weight and distance, and with extra fuel the next flight fuel requirement restriction must be calculated iteratively using $E_{\text{next}}=0$ as initial value and iterating until convergence within a suitable limit value such as for example 1 kg:

$$E_{\text{next}} = \text{Block fuel next flight} + f(W_{\text{takeoff}} + E_{\text{next}}, d) - \text{block fuel current flight}$$

The maximum extra fuel $E_{\text{max}}$ can be found by calculation means 6 by choosing the minimum of the restricting parameters calculated above:

$$E_{\text{max}} = \min(E_{\text{tank}}, E_{\text{takeoff}}, E_{\text{land}}, E_{\text{next}})$$

Finally, a set **E** of extra fuel loads can be calculated from 0 to $E_{\text{max}}$ at a suitable increment $\Delta$:, such as for example $\Delta=100$ kg :

$$E = \{0, \Delta, 2\Delta, \ldots, E_{\text{max}}\}$$

The set **E** of extra fuel loads from calculating means 9 and fuel usage parameters from database means 3 are then supplied to the third calculating means 7 in order to calculate the surplus fuel usage. The surplus fuel usage set C can be calculated as follows:

$$C = f(W_{takeoff} + E, d) - f(W_{takeoff}, d)$$

$$= \{ \quad f(W_{takeoff}, d) - f(W_{takeoff}, d),$$

$$f(W_{takeoff} + \Delta, d) - f(W_{takeoff}, d),$$

$$f(W_{takeoff} + 2\Delta, d) - f(W_{takeoff}, d),$$

$$\dots,$$

$$f(W_{takeoff} + E_{max}, d) - f(W_{takeoff}, d) \}$$

$$= \{ \quad 0,$$

$$f(W_{takeoff} + \Delta, d) - f(W_{takeoff}, d),$$

$$f(W_{takeoff} + 2\Delta, d) - f(W_{takeoff}, d),$$

$$\dots,$$

$$f(W_{takeoff} + E_{max}, d) - f(W_{takeoff}, d) \}$$

The set **E** of extra fuel loads from calculating means 6, the set C of surplus fuel usage from calculating means 7, and the fuel price parameters from the database means are then supplied to the fourth calculating means 8 in order to calculate the savings set **S**. The fuel prices $P_A$ and $P_B$ for the departure airport A and destination airport B, respectively, can be supplied from the database means, and are per volume unit such as liter or US gallons. The fuel density $\rho$ can be used to convert between fuel volume and weight can either be a constant defined within device 1 (for example $\rho$ = 0.8), or may be input via the user input means 2 (not shown in figure 1). The savings set S can be calculated as follows:

$$S = (E - C)(P_A - P_B)\rho - CP_A\rho$$

The savings set **S** from the calculating means 8 is then supplied to a selector means 9, which selects the greatest algebraic value $S_{max}$ from the savings set **S**. If $S_{max}$ has a positive value greater than zero, tankering extra fuel in accordance with the element of **E** corresponding to the maximum savings $S_{max}$ will be optimum and reduce fuel cost by $S_{max}$. If $S_{max}$ is zero, all the other elements in **S** will have negative value, and tankering extra fuel will increase fuel costs and will not be recommended. As a trivial result, if $P_A > P_B$, tankering extra fuel will always increase fuel cost and thus not be recommended.

The value $S_{max}$ and the corresponding element in the extra fuel set E are then supplied to an output means 10, which may be one or several computer displays, printers, storage mediums, etc or a combination thereof. Other parameters used in the calculations in device 1 may also be intermediately stored in RAM, EEPROM etc and be supplied to the output means for example in tabular form (not shown in figure 1).

Figure 1 shows a sending/receiving means 11 connected to the output means 10, which may be used for transmitting the optimum amount of extra fuel to an external device (not shown), such as for example a refuel unit, an onboard computer unit such as for example a Flight Management System, an external computing unit such as a remote computer in the operations control center, etc.

Although Figure 1 shows the database means 3 incorporated in the device 1, it is possible that the databases are located externally, for example within the operations control center or on an external sever coupled to an intranet or the internet. In this case, for example, the sending/receiving unit 11 is adapted for receiving information from the database means 3 and to supply this information to device 100.

The device 100 can be implemented in hardware or in software. In the latter case the tankering software can for example be a JavaScript or a Perl program for use with the internet, accessible by computer, PDA or mobile telephone. Alternatively, the device 1 can be a standalone device or a portable computer having a common known operating system like Windows, for example for crew use in the cockpit, such as a part of an electronic flight bag.

As a further alternative, the device 1 according to the present invention can be integrated into an onboard computer, i.e. as a module of the flight management system (FMS), and for example receive navigation and fuel usage data from the FMS.

As a still further alternative, all databases, calculation means, etc of device 100 can be for example located on an external server computer connected to the internet/intranet, wherein the input means 2 and the output means 10 communicate wirelessly according to the Bluetooth Standard or one of the common known IEEE Wireless Standards.

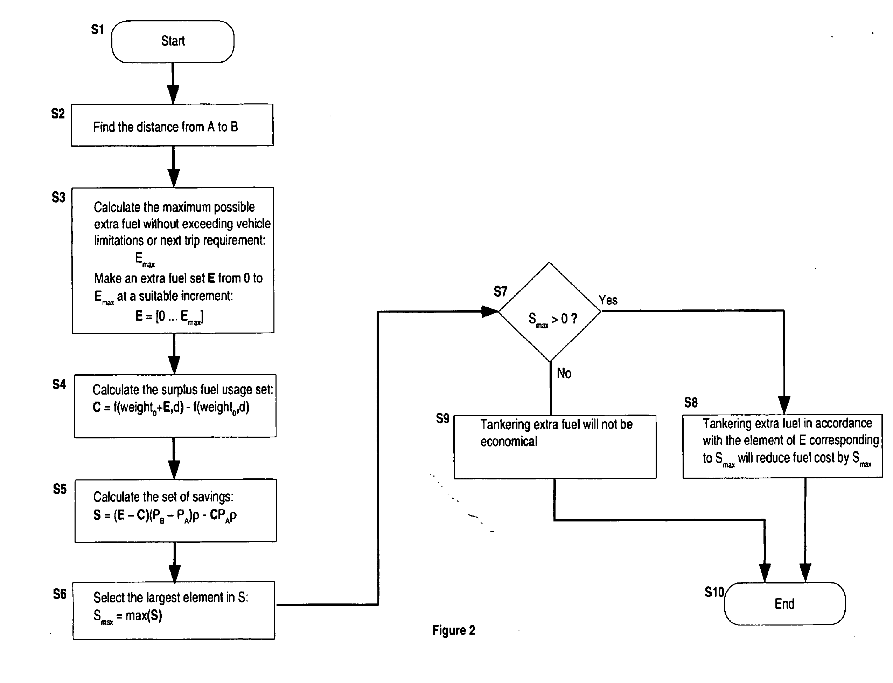

Figure 2 shows a flow chart for determining the optimum amount of extra fuel according to the device as shown in Figure 1, according to a preferred embodiment.

After starting the method in step S1, in step S2 the distance from departure location A to destination location B is calculated using the formula mentioned above. The distance is corrected as necessary for the forecasted environmental conditions, such as for example wind etc. Next, in step S3 the maximum possible extra fuel $E_{max}$ without exceeding vehicle limitations such as tank capacity, maximum takeoff or landing weights, or the next trip fuel requirement, is calculated, and a set of possible extra fuel loads E ranging from 0 to $E_{max}$ is calculated at a suitable increment, for example for every 100 kg. In step S4 the surplus fuel usage set **C** is calculated to find the surplus fuel usage due to the heavier vehicle with the extra fuel loads. Next, in step S5, the savings set **S** is calculated, using the previously calculated extra fuel loads **E,** the surplus fuel usage **C,** and fuel price and density. In step S6 the maximum value element $S_{max}$ of the savings set **S** is selected. In step S7 the maximum value $S_{max}$ is evaluated. If $S_{max} > 0$ the method proceeds to step S8, and tankering extra fuel in accordance with the element of E corresponding to $S_{max}$ will give the optimum result with maximum savings. If $S_{max}=0$ the method proceeds to step S9, tankering extra fuel will not result in savings. Although the elements of S can be negative, $S_{max}$ will never be less than zero which corresponds to tankering no extra fuel. After completing step S8 or S9, the method proceeds to step S10 which is the end of the method.

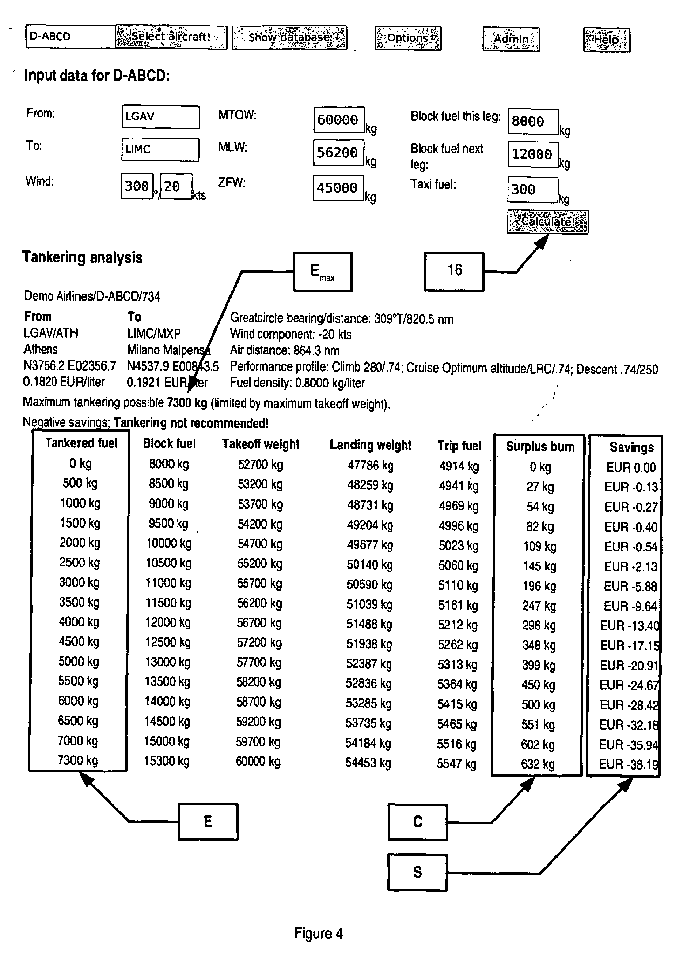

Examples of sets **E, C** and **S** are shown in detail in the Figures 4 to 8, as described later.

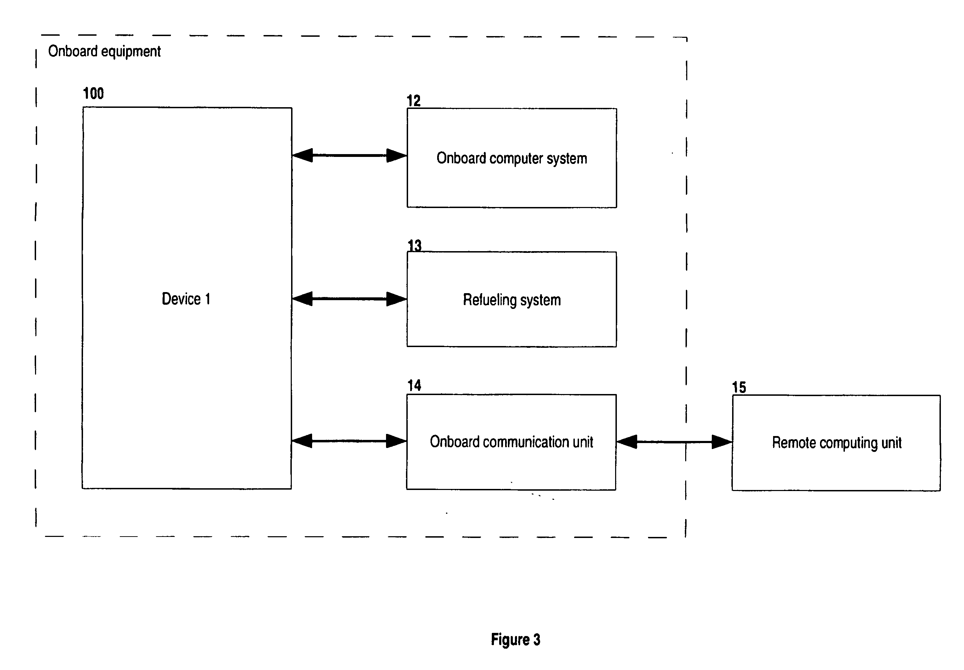

Figure 3 shows a system for tankering an optimum amount of extra fuel according to a preferred embodiment.

The system according to Figure 3 comprises the device 1, as shown in Figure 1, an onboard computer system 12, a refueling system 13, an onboard communications unit 14, and a remote central computing unit 15.

The onboard computer system 12 may for example be a Flight Management System which may supply navigation and fuel usage data as described above.

The refueling system 13 may for example provide automatic control of the fuel valves during the refueling process to upload the optimum fuel amount.

The onboard communications unit 14 may for example be an ACARS unit or another datalink unit according to standards for wireless communication, and may contact one ore more remote computing units 15, such as for example a central computing unit at an airline operations center to upload statistics or download database updates, or for example a fuel demand coordination unit at the local airport, etc.

Figure 4 shows a screen shot produced by a software program implementing the elements of the device 100 according to Figure 1 in software. Figure 1 shows input parameters in the upper part and output results in form of a table in the lower part.

At first, the user must select an aircraft (D-ABCD). Then the user must input the departure airport (LGAV) and the destination airport (LIMC). Further parameters to be input either through the input means 2 or automatically selected from the database means 3 on the basis of the selected aircraft, are wind, MTOW (maximum takeoff weight), MLW (maximum landing weight), ZFW (zero fuel weight), block fuel this leg, block fuel next leg, taxi fuel. The term 'block fuel' means total fuel on board prior to engine start.

Next, the user can press the "Calculate" button 16 for carrying out the method according to Figure 2 for determining the optimum amount of extra fuel to be tankered.

Figure 4 shows, that the maximum tankering $E_{max}$ which is possible is 7300 kg and limited by the maximum takeoff weight.

The output means 10 according to Figure 1 displays the table shown in Figure 4. In the first column of the table the set **E** of extra fuel loads is shown ranging from 0 kg to 7300 kg with 500 kg increments. 7300 kg is the maximum tankering possible and limited by the maximum takeoff weight in this case, as found in step S3, refer to Figure 2. This theoretical maximum tankering does not necessaryly correspond to the amout of extra fuel with the greatest savings. Columns two through five are shown for reference to give the user key weight figures for the extra fuel loads **E.** The sixt column in the table represents the corresponding set **C** of surplus fuel usage, and the seventh column represents the corresponding savings set **S.** According to this example the savings set **S** of savings has no positive elements and $S_{max}=0$, which means that tankering is not economical and tankering extra fuel is not recommended.

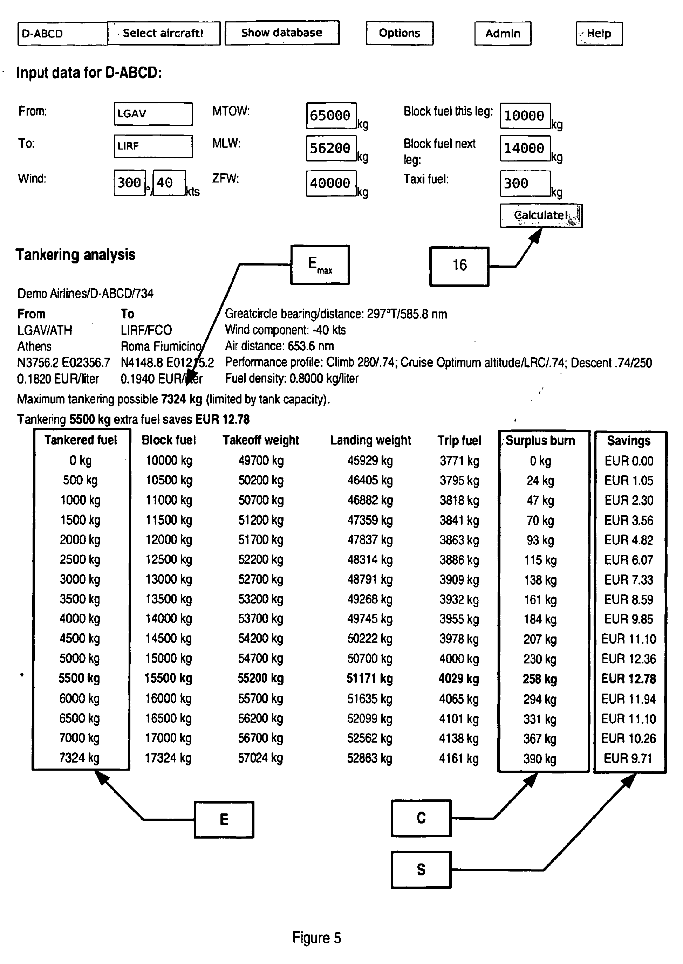

Figure 5 shows another implementation of the present invention with different input parameters from the parameters shown in Figure 4. In this example, the maximum tankering possible is 7324 kg, limited by the tank capacity. Therefore, the set **E** of extra fuel loads in the first column of the table shown in Figure 5 is in the range from 0 kg to 7324 kg. Similar to Figure 4, corresponding sets of weights are shown in columns two to five, and corresponding sets **C** and **S** of surplus fuel usage and savings, respectively, are shown in columns six and seven. According to this example there are positive elements in the savings set S and the maximum value $S_{max}$ is selected, which corresponds to the amount of fuel to be tankered. In Figure 5 an extra fuel load of 5500 kg is the optimum and saves 12,78 EUR.

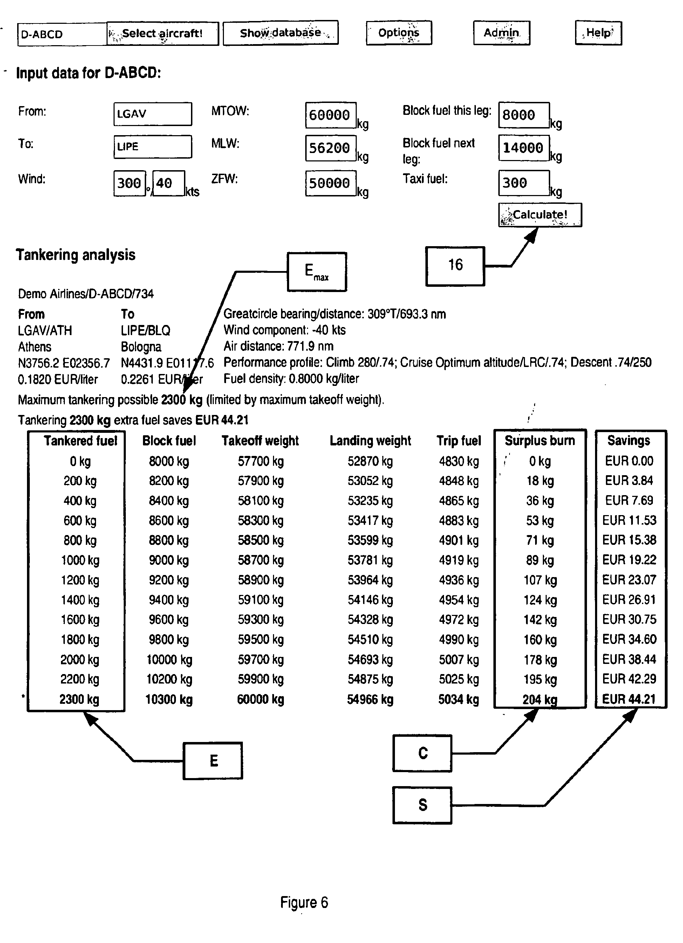

Figure 6 shows another example of input parameters, wherein the theoretical maximum tankering possible is 2300 kg and limited by the maximum takeoff weight. Therefore, the set **E** of extra fuel loads is within the range 0 kg to 2300 kg at 200 kg increments. The table shows that tankering an amount of 2300 kg extra fuel is optimum and saves 44,21 EUR.

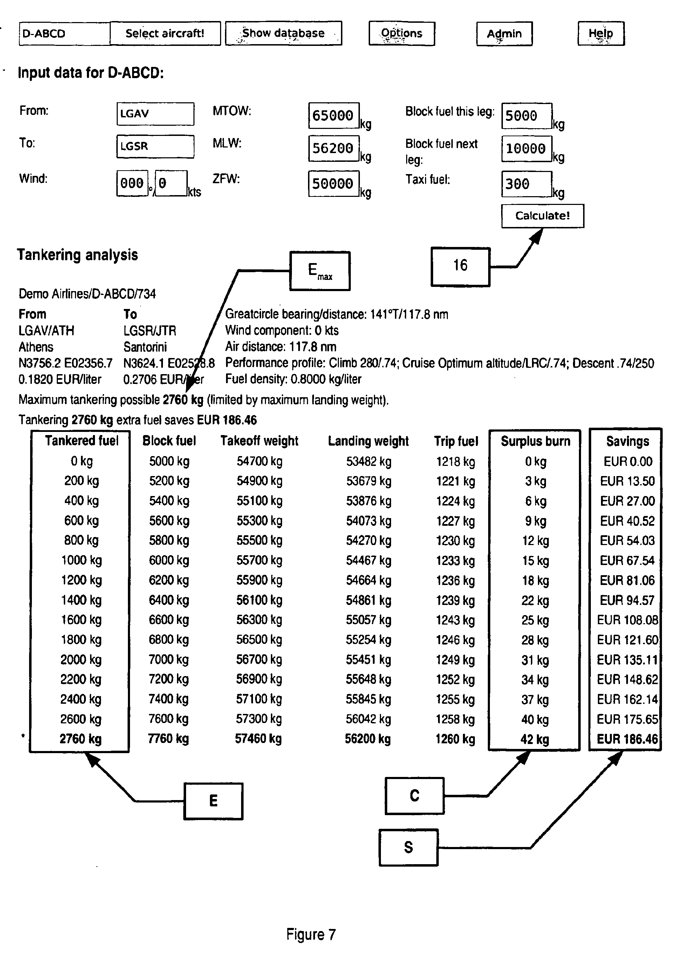

Figure 7 shows another example with different input parameters. In this example, the theoretical maximum tankering possible is 2760 kg and limited by the maximum landing weight. Therefore, the set **E** of extra fuel loads is within the range 0 kg to 2760 kg. The table shows that the maximum savings is 186,46 EUR, corresponding to an optimum extra fuel load of 2760 kg.

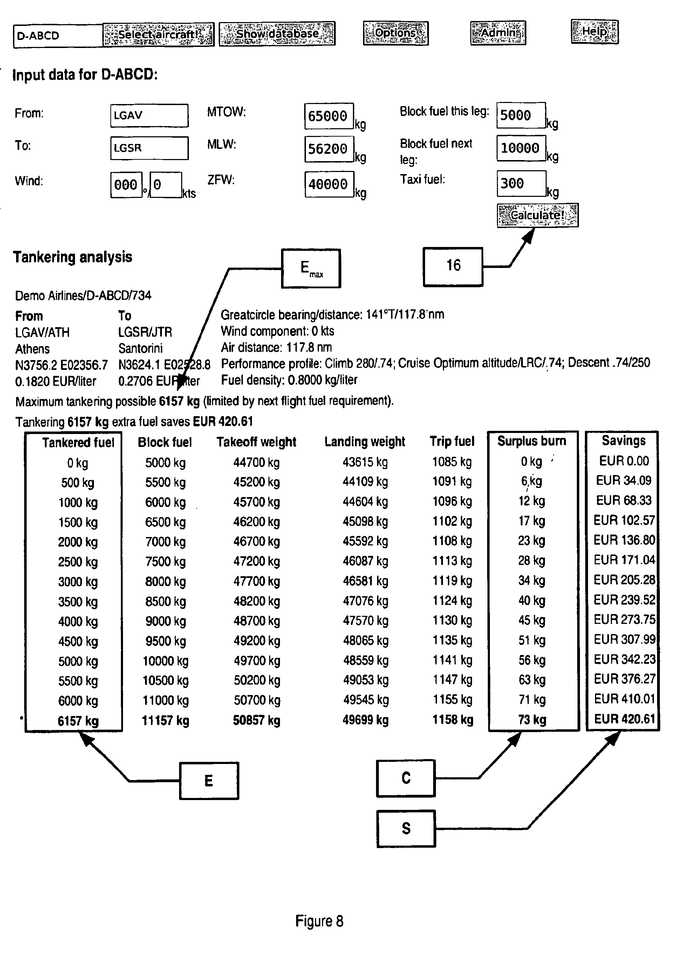

Figure 8 shows another example with different input parameters. In this case, the theoretical maximum tankering possible is 6157 kg, limited by the next flight fuel requirement, represented by the "Block fuel next leg" input parameter. In this case, the set E of extra fuel loads is within the range 0 kg to 6157 kg at 500 kg increments. The table shown in Figure 8 represents the corresponding set S of savings in the right column. In this example, the optimum amount of extra fuel is 6157 kg which results in a saving of 420,61 EUR.

Figure 9 shows an example fuel usage lookup table for a Boeing B737-400 aircraft, for a flight profile using defined climb, cruise and descent speeds and cruise at optimum altitudes. It can be seen from the table that fuel usage increases with increasing takeoff weight and with increasing distance.

It is explicitly stated that all features disclosed in the description and/or the claims are intended to be disclosed separately and independently from each other for the purpose of original disclosure as well as for the purpose of restricting the claims invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention.

**Claims**

1.  A device for determining an optimum amount of extra fuel for tankering of a vehicle comprising an input means (2) for inputting a set of parameters effecting the fuel consumption of said vehicle; a database means (3) for storing information indicative for the fuel consumption of said vehicle for a specific operating condition; and determining means (5) (6) (7) (8) (9) for determining an optimum amount of extra fuel for tankering said vehicle on the basis of the set of parameters and information stored in the database (3) by taking into account that the fuel consumption increases non-linearly with increasing trip distance and weight of the vehicle.

2.  A device according to claim 1, wherein the determining means (1) comprises a first selector means (4) for selecting information stored in the database (3) and associated with vehicle type information included in the set of parameters, wherein the selected information is indicative for the fuel consumption of said vehicle.

3.  A device according to claim 1 or 2, wherein the determining means (1) comprises a first calculation means (5) for calculating a distance on the basis of position information for a departure location A and destination location B, and correcting the distance for environmental influences included in the set of parameters.

4.  A device according to any one of claims 1 to 3, wherein the determining means (1) comprises a second calculation means (6) for finding the maximum possible extra fuel for a trip, limited by the lowest value of weight information corresponding to a) fuel tank capacity for said vehicle, b) maximum limiting weights for said vehicle, c) fuel requirements for the next trip, and d) other constraints limiting the maximum possible fuel for said vehicle included in the set of parameters and/or stored in the database (3), and calculating a set of possible extra fuel weights E ranging from zero to the maximum possible extra fuel weight at suitable increments.

5.  A device according to claim 4, wherein the determining means (1) comprises a third calculation means (7) for finding a set C of surplus fuel consumption corresponding to the set of extra fuel weights E, representing the surplus fuel consumption compared to no tankering due to the increased weight of the vehicle with extra fuel:

$$\mathbf{C} = f(W_{takeoff} + \mathbf{E}, d) - f(W_{takeoff}, d);$$

wherein f(takeoff weight, distance) is the fuel consumption of the said vehicle as a function of takeoff weight and distance, $W_{takeoff}$ is the weight of the said vehicle at the start of the trip without tankering extra fuel, and d is the distance from the departure location A to the destination location B.

6. A device according to claim 5, wherein the determining means (1) comprises a fourth calculation means (8) for finding a set S of savings for the set of extra fuel E and the set of surplus fuel consumption C by:

$$S = (E - C)(P_A - P_B)\rho - CP_A\rho \; ;$$

wherein $P_A$ is the fuel price at the departure location, $P_B$ is the fuel price at the destination location, and p is the fuel density.

7. A device according to claim 6, wherein the determining means (1) comprises a second selector means (9) for finding the maximum value of the set S of savings and determining that the corresponding element of the extra fuel set E shall be tankered.

8. A method for determining the optimum amount of extra fuel for tankering a vehicle, comprising the steps of: receiving a set of parameters effecting the fuel consumption of the vehicle; and determining the optimum amount of extra fuel for tankering said vehicle on the basis of the set of parameters and information stored in a database indicative for the fuel consumption of said vehicle for a specific operating condition, by taking into account that the fuel consumption increases non-linearly with increasing trip distance and weight of the vehicle.

9. A method according to claim 8, wherein the determining step comprises calculating (S2) a distance on the basis of position information about a departure location A and a destination location B, corrected according to environmental information included in the set of parameters.

10. A method according to claim 8 or 9, wherein the determining step comprises selecting information stored in the database and associated with vehicle type information included in the set of parameters, wherein the selected information is indicative for the fuel consumption of said type of vehicle.

11. A method according to any one of claims 8 to 10, wherein the determining step comprises calculating (S3) the maximum possible amount of extra fuel for the said vehicle, limited by the lowest value of weight information corresponding to a) fuel tank capacity for said vehicle, b) maximum limiting weights for said vehicle, c) fuel requirements for the next trip, and d) other constraints limiting the maximum possible fuel for said vehicle included in the set of parameters and/or stored in the database (3), and calculating a set of possible extra fuel weights E ranging from zero to the maximum possible extra fuel weight at suitable increments.

12. A method according to claim 11, wherein the determining step comprises calculating (S4) a set C of surplus fuel consumption corresponding to the set of extra fuel weights E, representing the surplus fuel consumption compared to no tankering due to the increased weight of the vehicle with extra fuel:

$$C = f(W_{takeoff} + E , d) - f(W_{takeoff} , d) \; ;$$

wherein f(takeoff weight, distance) is the fuel consumption of the said vehicle as a function of takeoff weight and distance, $W_{takeoff}$ is the weight of the said vehicle at the start of the trip without tankering extra fuel, and d is the distance from the departure location to the destination location.

13. A method according to claim 12, wherein the determining step comprises calculating (S5) a set S of savings for the set of extra fuel loads E and the set of surplus fuel consumption C by:

$$S = (E - C)(P_A - P_B)\rho - CP_A\rho \; ;$$

wherein $P_A$ is the fuel price at the departure location, $P_B$ is the fuel price at the destination location, and p is the fuel density.

14. A method according to claim 13, wherein the determining step comprises selecting (S6) the maximum value of the savings set S and determining that the corresponding element of the extra fuel set E shall be tankered.

**15.** A computer program product disposed on a computer readable medium and inlcuding instructions for causing a processor to execute the steps of the method according to any one of claims 8 to 14.

**16.** A system for tankering an optimum amount of extra fuel for an aircraft comprising the device according to any one of claims 1 to 7; an onboard computer system (12) for computing navigation and fuel consumption data; a refueling system (13) for controlling fuel valves during the fueling process according to the determined optimum amount of extra fuel.

**Patentansprüche**

**1.** Vorrichtung zum Bestimmen einer optimalen Menge von Extratreibstoff zum Betanken eines Fahrzeugs, enthaltend ein Eingabemittel (2) zum Eingeben eines Satzes von Parametern, die einen Einfluss auf den Kraftstoffverbrauch des Fahrzeugs haben; ein Datenbankmittel (3) zum Speichern von Information, die kennzeichnend ist für den Kraftstoffverbrauch des Fahrzeugs für eine spezifische Betriebsbedingung; und ein Bestimmungsmittel (5) (6) (7) (8) (9) zum Bestimmen einer optimalen Menge von Extrakraftstoff zum Betanken des Fahrzeugs basierend auf dem Satz von Parametern und der Information, die in der Datenbank (3) gespeichert ist, unter Berücksichtigung, dass der Kraftstoffverbrauch mit zunehmender Reisestrecke und Gewicht des Fahrzeugs nicht linear zunimmt.

**2.** Vorrichtung nach Anspruch 1, wobei das Bestimmungsmittel (1) ein erstes Auswählermittel (4) aufweist zum Auswählen von Information, die in der Datenbank (3) gespeichert ist, und von zugehöriger Fahrzeugtypinformation, die in dem Satz von Parametern enthalten ist, wobei die ausgewählte Information kennzeichnend ist für den Kraftstoffverbrauch des Fahrzeugs.

**3.** Vorrichtung nach Anspruch 1 oder 2, wobei das Bestimmungsmittel (1) ein erstes Berechnungsmittel (5) aufweist zum Berechnen einer Strecke basierend auf einer Positionsinformation für einen Startort (A) und einen Zielort (B), und zum Korrigieren der Strecke für Umgebungseinflüsse, die in den Satz von Parametern enthalten sind.

**4.** Vorrichtung nach einem der Ansprüche 1 bis 3, wobei das Bestimmungsmittel (1) ein zweites Berechnungsmittel (6) aufweist zum Finden des maximal möglichen Extrakraftstoffs für eine Strecke, begrenzt durch den kleinsten Wert einer Gewichtsinformation, entsprechend a) einer Kraftstofftankkapazität des Fahrzeugs, b) einem maximalen Grenzgewicht für das Fahrzeug, c) Kraftstofferfordernissen für die nächste Strecke, und d) anderen Einschränkungen, die den maximal möglichen Kraftstoff für das Fahrzeug beschränken, die in dem Satz von Parametern enthalten und/oder in der Datenbank (3) gespeichert sind, und zum Berechnen eines Satzes von möglichen Extrakraftstoffgewichten (E), die bei geeigneten Inkrementierungen von Null bis zu einem maximal möglichen Extrakraftstoffgewicht reichen.

**5.** Vorrichtung nach Anspruch 4, wobei das Bestimmungsmittel (1) ein drittes Berechnungsmittel (7) aufweist zum Finden eines Satzes C für einen Überschusskraftstoffverbrauch entsprechend dem Satz von Extrakraftstoffgewichten E, der den Überschusskraftstoffverbrauch darstellt verglichen zu keiner Betankung aufgrund des erhöhten Gewichts des Kraftfahrzeugs mit Extrakraftstoff:

$$C = f(W_{start} + E, d) - f(W_{start}, d);$$

wobei f(Startgewicht, Strecke) der Kraftstoffverbrauch des Fahrzeugs als Funktion des Startgewichts und der Strecke ist, $W_{start}$ das Gewicht des Fahrzeugs zu Beginn der Strecke ohne Betankung mit Extrakraftstoff ist, und d die Strecke von dem Startort A zu dem Zielort B ist.

**6.** Vorrichtung nach Anspruch 5, wobei das Bestimmungsmittel (1) ein viertes Berechnungsmittel (8) aufweist zum Finden eines Satzes S von Ersparnissen für den Satz von Extrakraftstoff E und den Satz von Überschusskraftstoffverbrauch C durch:

$$S = (E - C)(P_A - P_B)\rho - CP_A\rho;$$

wobei $P_A$ der Kraftstoffpreis am Startort ist, $P_B$ der Kraftstoffpreis am Zielort ist, und p die Kraftstoffdichte ist.

7. Vorrichtung nach Anspruch 6, wobei das Bestimmungsmittel (1) ein zweites Auswählermittel (9) aufweist zum Finden des maximalen Werts des Satzes S von Ersparnissen und zum Bestimmen, dass das entsprechende Element des Extrakraftstoffsatzes E getankt werden soll.

8. Verfahren zum Bestimmen der optimalen Menge an Extrakraftstoff für ein Betanken eines Fahrzeugs, mit den Schritten: Empfangen eines Satzes von Parametern, die Einfluss auf den Kraftstoffverbrauch des Fahrzeugs haben; und Bestimmen der optimalen Menge an Extrakraftstoff für ein Betanken des Kraftfahrzeugs basierend auf dem Satz von Parametern und Information, die in einer Datenbank gespeichert ist, die kennzeichnend ist für den Kraftstoffverbrauch des Fahrzeugs für eine spezifische Betriebsbedingung, indem berücksichtigt wird, dass der Kraftstoffverbrauch mit zunehmender Reisestrecke und Gewicht des Fahrzeugs nicht linear zunimmt.

9. Verfahren nach Anspruch 8, wobei der Bestimmungsschritt ein Berechnen (S2) einer Strecke basierend auf einer Positionsinformation über einen Startort A und einen Zielort B aufweist, korrigiert gemäß einer Umgebungsinformation, die in dem Satz von Parametern enthalten ist.

10. Verfahren nach Anspruch 8 oder 9, wobei der Bestimmungsschritt ein Auswählen von Information aufweist, die in der Datenbank gespeichert ist und zu Fahrzeugtypinformation gehört, die in dem Satz von Parametern enthalten ist, wobei die ausgewählte Information kennzeichnend ist für den Kraftstoffverbrauch des Typs von Fahrzeug.

11. Verfahren nach einem der Ansprüche 8 bis 10, wobei der Bestimmungsschritt ein Berechnen (S3) der maximal möglichen Menge an Extrakraftstoff für das Kraftfahrzeug aufweist, begrenzt durch den untersten Wert von Gewichtsinformation entsprechend a) einer Kraftstofftankkapazität für das Kraftfahrzeug, b) einem maximalen Begrenzungsgewichte für das Fahrzeug, c) Kraftstoffanforderungen für die nächste Strecke, und d) anderen Einschränkungen, die den maximal möglichen Kraftstoff für das Kraftfahrzeug begrenzen, die in dem Satz von Parametern enthalten und/oder in der Datenbank (3) gespeichert sind, und ein Berechnen eines Satzes von möglichem Extrakraftstoffgewichten E, die mit geeigneten Inkrementierungen von Null bis zu dem maximal möglichen Extrakraftstoffgewicht reichen.

12. Verfahren nach Anspruch 11, wobei der Bestimmungsschritt ein Berechnen (S4) eines Satzes C von Überschusskraftstoffverbrauch aufweist, entsprechend dem Satz von Extrakraftstoffgewichten E, die einen Überschusskraftstoffverbrauch darstellen verglichen mit keiner Betankung, aufgrund des erhöhten Gewichts des Kraftfahrzeugs mit Extrakraftstoff:

$$C = f(W_{start} + E, d) - f(W_{start}, d);$$

wobei f(Startgewicht, Strecke) der Kraftstoffverbrauch des Kraftfahrzeugs als Funktion des Startgewichts und der Strecke ist, $W_{start}$ das Gewicht des Kraftfahrzeugs zu Beginn der Strecke ohne Betankung mit Extrakraftstoff ist, und d die Strecke von dem Startort zu dem Zielort ist.

13. Verfahren nach Anspruch 12, wobei der Bestimmungsschritt ein Berechnen (S5) eines Satzes S von Ersparnissen für den Satz von Extrakraftstoffbeladungen E und den Satz von Überschusskraftstoffverbrauch C aufweist mit:

$$S = (E - C)(P_A - P_B)\rho - CP_A\rho;$$

wobei $P_A$ der Kraftstoffpreis an dem Startort, $P_B$ der Kraftstoffpreis an dem Zielort, und p die Kraftstoffdichte ist.

14. Verfahren nach Anspruch 13, wobei der Bestimmungsschritt ein Auswählen (S6) des maximalen Werts des Ersparnissatzes S aufweist, und ein Bestimmen, das das entsprechende Element des Extrakraftstoffsatzes E getankt werden soll.

15. Computerprogrammprodukt, das auf einem computerlesbaren Medium angeordnet ist, und Anweisungen enthält zur Veranlassung eines Prozessors zum Durchführen der Schritte des Verfahrens gemäß einem der Ansprüche 8 bis 14.

16. System zum Betanken einer optimalen Menge von Extrakraftstoff für ein Flugzeug, enthaltend die Vorrichtung gemäß einem der Ansprüche 1 bis 7; ein On-Board Computersystem (12) zur Berechnung von Navigations- und Kraftstoffverbrauchdaten; ein Betankungssystem (13) zur Steuerung von Kraftstoffventilen während der Betankungsprozedur gemäß der bestimmten optimalen Menge an Extrakraftstoff.

**Revendications**

1. Un système pour déterminer la quantité optimale de carburant supplémentaire pour le tankering d'un véhicule incluant un moyen d'entré (2) pour entrer un jeu de paramètres influençant la consommation de carburant dudit véhicule ; un moyen de base de données (3) pour stocker des informations indiquant la consommation de carburant dudit véhicule pour des conditions opérationnelles spécifiques ; et moyens de détermination (5) (6) (7) (8) (9) pour déterminer une quantité optimale de carburant supplémentaire pour le tankering dudit véhicule sur la base du jeu de paramètres et informations stockées dans la base de données (3) prenant en considération que la consommation du carburant augmente non-linéairement avec l'augmentation de la distance de voyage et le poids du vehicule.

2. Un système selon revendication 1, où le moyen de détermination (1) include un premier moyen de sélection (4) pour sélectionner des informations stockées dans la base de données (3) associées avec les informations du type de véhicule inclues dans le jeu de paramètres, où les informations sélectionnées sont indicatrices de la consommation dudit véhicule.

3. Un système selon revendication 1 ou 2, où le moyen de détermination (1) include un premier moyen de calcul (5) pour calculer la distance sur la base d'informations sur la position du lieu de départ A et de destination B, corrigeant la distance sur la base d'influences environnementales inclues dans le jeu de paramètres.

4. Un système selon revendication 1 ou 2 ou 3, ou le moyen de détermination (1) include un deuxième moyen de calcul (5) pour calculer le maximum possible poids de carburant supplémentaire pour un voyage, limité par la plus faible valeur du poids correspondant à a) la capacité des réservoirs dudit véhicule, b) poids maximales pour ledit véhicule, c) besoin de carburant pour le prochain voyage, et d) autre contraintes limitant le maximum de carburant pour ledit vehicule inclus dans le jeu de paramètres ou stockées dans la base de données (3), et pour calculer un jeu de possible poids de carburant supplémentaire E , du zéro jusqu'au maximum possible poids de carburant supplémentaire avec des intervalles convenables.

5. Un système selon revendication 4, ou le moyen de détermination (1) include un troisième moyen de calcul (7) pour trouver un jeu C de consommations de carburant supplémentaires par rapport à un jeu de poids supplémentaires E, représentant les consommations de carburant supplémentaires par rapport à zéro tankering, causé par l'augmentation du poids du véhicule avec du carburant supplémentaire :

$$C = f(W_{takeoff} + E, d) - f(W_{takeoff}, d);$$

ou f(poids, distance) est la consommation du carburant en fonction du poids au décollage et de la distance, $W_{takeoff}$ est le poids dudit vehicule au décollage sans tankering, et d est la distance entre l'endroit du départ A et de la destination B.

6. Un système selon revendication 5, où le moyen de détermination (1) include un quatrième moyen de calcul (8) pour trouver un jeu S d'économies pour le jeu de poids supplémentaires E et le jeu de consommations de carburant supplémentaires C, ou :

$$S = (E - C)(P_A - P_B)\rho - CP_A\rho$$

; où $P_A$ est le prix du carburant à l'endroit du départ, $P_B$ est le prix du carburant à la destination, et p est la densité du carburant.

**7.** Un système selon revendication 6, ou le moyen de détermination (1) inclue un deuxième moyen de sélection (9) pour trouver la valeur maximale dans le jeu S d'économies et pour ainsi déterminer l'élément correspondant dans le jeu de poids supplémentaires E qui donne la quantité de tankering.

**8.** Une méthode pour déterminer la quantité optimale de carburant pour le tankering d'un véhicule, incluant les étapes de : recevoir un jeu de paramètres influençant la consommation du carburant dudit véhicule ; et de déterminer la quantité optimale de carburant supplémentaire à ravitailler ledit véhicule sur la base du jeu de paramètres et informations stockées dans la base de données pour la consommation de carburant dudit véhicule pour des conditions spécifiques opérationnelles, en prenant compte que la consommation de carburant augmente non-linéairement avec la distance de voyage et le poids du véhicule.

**9.** Une méthode selon revendication 8, ou l'étape déterminant inclue le calcul (S2) d'une distance sur la base de l'information de l'endroit du départ A et l'endroit de destination B, corrigé sur la base d'influences environnementales inclus dans le jeu de paramètres.

**10.** Une méthode selon revendication 8 ou 9, ou l'étape de détermination inclue la sélection d'information stockée dans la base de données et associée avec l'information du type de véhicule dans le jeu de paramètres, ou l'information sélectionnée donne la consommation dudit type de véhicule.

**11.** Une méthode selon revendication 8 ou 9 ou 10, ou l'étape de détermination inclue le calcul (S3) de la quantité maximale de carburant supplémentaire pour ledit véhicule, limité par le poids inferieure du poids correspondant à a) la capacité des réservoirs du ledit véhicule, b) poids maximales pour ledit véhicule, c) besoin de carburant pour le prochain voyage, et d) autres contraintes limitant le maximum de carburant pour ledit véhicule inclus dans le jeu de paramètres ou stockées dans la base de données (3), et pour calculer un jeu de possible poids de carburant supplémentaire E , du zéro jusqu'au maximum possible poids de carburant supplémentaire avec des intervalles convenables.

**12.** Une méthode selon revendication 11, où l'étape de détermination inclue le calcul (S4) d'un jeu C de consommations de carburant supplémentaires par rapport à un jeu de poids supplémentaires E, représentant les consommations de carburant supplémentaires par rapport à zéro tankering, causé par l'augmentation du poids du véhicule avec du carburant supplémentaire :

$$C \; = \; f(W_{takeoff} + E \, , \, d) \; - \; f(W_{takeoff}, \, d)$$

; ou f(poids, distance) est la consommation du carburant en fonction du poids au décollage et de la distance, $W_{takeoff}$ est le poids dudit véhicule au décollage sans tankering, et d est la distance entre l'endroit du départ et de la destination.

**13.** Une méthode selon revendication 12, où l'étape de détermination inclue le calcul (S5) d'un jeu un jeu S d'économies pour le jeu de poids supplémentaires E et le jeu de consommations de carburant supplémentaires C, ou :

$$S \; = \; (E - C)(P_A - P_B)\rho \, - \, CP_A\rho$$

où $P_A$ est le prix du carburant à l'endroit du départ, $P_B$ est le prix du carburant à la destination, et p est la densité du carburant.

**14.** Une méthode selon revendication 13, où l'étape de détermination inclue la sélection (S6) de la valeur maximale dans le jeu S d'économies et pour ainsi déterminer l'élément correspondant dans le jeu de poids supplémentaires E qui donne la quantité de tankering.

**15.** Un programme informatique disponible sur un moyen lisible par ordinateur, incluant des instructions pour que le processeur exécute les étapes d'un ou plusieurs méthodes décrites dans revendications 8 à 14.

**16.** Un système pour ravitailler une quantité optimale de carburant dans un avion incluant un ou plusieurs systèmes décrits dans revendications 1 à 7 ; un ordinateur embarqué (12) pour des calculs de navigation et de data de consommation de carburant ; un système de ravitaillement (13) pour contrôler les vannes de carburant pendant le ravitaillement selon la quantité optimale de carburant supplémentaire déterminé.

Figure 1

**S1** Start

**S2** Find the distance from A to B

**S3** Calculate the maximum possible extra fuel without exceeding vehicle limitations or next trip requirement:
$E_{max}$
Make an extra fuel set **E** from 0 to $E_{max}$ at a suitable increment:
**E** = [0 ... $E_{max}$]

**S4** Calculate the surplus fuel usage set:
**C** = f(weight$_0$+**E**,d) - f(weight$_0$,d)

**S5** Calculate the set of savings:
**S** = (**E** – **C**)($P_B$ – $P_A$)$\rho$ - **C**$P_A$$\rho$

**S6** Select the largest element in S:
$S_{max}$ = max(**S**)

**S7** $S_{max} > 0$ ?

Yes

No

**S9** Tankering extra fuel will not be economical

**S8** Tankering extra fuel in accordance with the element of E corresponding to $S_{max}$ will reduce fuel cost by $S_{max}$

**S10** End

Figure 2

Onboard equipment

**100**

Device 1

**12**

Onboard computer system

**13**

Refueling system

**14**

Onboard communication unit

**15**

Remote computing unit

Figure 3

EP 1 595 789 B1

| D-ABCD | Select aircraft! | Show database | Options | Admin | Help |

## Input data for D-ABCD:

From: `LGAV`  MTOW: `60000` kg  Block fuel this leg: `8000` kg

To: `LIMC`  MLW: `56200` kg  Block fuel next leg: `12000` kg

Wind: `300`°/`20` kts  ZFW: `45000` kg  Taxi fuel: `300` kg

`Calculate!`

## Tankering analysis

$E_{max}$   `16`

Demo Airlines/D-ABCD/734

| From | To | |
|---|---|---|
| LGAV/ATH | LIMC/MXP | Greatcircle bearing/distance: 309°T/820.5 nm |
| Athens | Milano Malpensa | Wind component: -20 kts |
| N3756.2 E02356.7 | N4537.9 E00843.5 | Air distance: 864.3 nm |
| 0.1820 EUR/liter | 0.1921 EUR/liter | Performance profile: Climb 280/.74; Cruise Optimum altitude/LRC/.74; Descent .74/250 |
| | | Fuel density: 0.8000 kg/liter |

Maximum tankering possible **7300 kg** (limited by maximum takeoff weight).

Negative savings; **Tankering not recommended!**

| Tankered fuel | Block fuel | Takeoff weight | Landing weight | Trip fuel | Surplus burn | Savings |
|---|---|---|---|---|---|---|
| 0 kg | 8000 kg | 52700 kg | 47786 kg | 4914 kg | 0 kg | EUR 0.00 |
| 500 kg | 8500 kg | 53200 kg | 48259 kg | 4941 kg | 27 kg | EUR -0.13 |
| 1000 kg | 9000 kg | 53700 kg | 48731 kg | 4969 kg | 54 kg | EUR -0.27 |
| 1500 kg | 9500 kg | 54200 kg | 49204 kg | 4996 kg | 82 kg | EUR -0.40 |
| 2000 kg | 10000 kg | 54700 kg | 49677 kg | 5023 kg | 109 kg | EUR -0.54 |
| 2500 kg | 10500 kg | 55200 kg | 50140 kg | 5060 kg | 145 kg | EUR -2.13 |
| 3000 kg | 11000 kg | 55700 kg | 50590 kg | 5110 kg | 196 kg | EUR -5.88 |
| 3500 kg | 11500 kg | 56200 kg | 51039 kg | 5161 kg | 247 kg | EUR -9.64 |
| 4000 kg | 12000 kg | 56700 kg | 51488 kg | 5212 kg | 298 kg | EUR -13.40 |
| 4500 kg | 12500 kg | 57200 kg | 51938 kg | 5262 kg | 348 kg | EUR -17.15 |
| 5000 kg | 13000 kg | 57700 kg | 52387 kg | 5313 kg | 399 kg | EUR -20.91 |
| 5500 kg | 13500 kg | 58200 kg | 52836 kg | 5364 kg | 450 kg | EUR -24.67 |
| 6000 kg | 14000 kg | 58700 kg | 53285 kg | 5415 kg | 500 kg | EUR -28.42 |
| 6500 kg | 14500 kg | 59200 kg | 53735 kg | 5465 kg | 551 kg | EUR -32.18 |
| 7000 kg | 15000 kg | 59700 kg | 54184 kg | 5516 kg | 602 kg | EUR -35.94 |
| 7300 kg | 15300 kg | 60000 kg | 54453 kg | 5547 kg | 632 kg | EUR -38.19 |

`E`   `C`   `S`

Figure 4

| D-ABCD | Select aircraft! | Show database | Options | Admin | Help |

## Input data for D-ABCD:

From: `LGAV`　MTOW: `65000` kg　Block fuel this leg: `10000` kg

To: `LIRF`　MLW: `56200` kg　Block fuel next leg: `14000` kg

Wind: `300` ° / `40` kts　ZFW: `40000` kg　Taxi fuel: `300` kg

Calculate!

## Tankering analysis

$E_{max}$　16

Demo Airlines/D-ABCD/734

| From | To | Greatcircle bearing/distance: 297°T/585.8 nm |
| --- | --- | --- |
| LGAV/ATH | LIRF/FCO | Wind component: -40 kts |
| Athens | Roma Fiumicino | Air distance: 653.6 nm |
| N3756.2 E02356.7 | N4148.8 E01215.2 | Performance profile: Climb 280/.74; Cruise Optimum altitude/LRC/.74; Descent .74/250 |
| 0.1820 EUR/liter | 0.1940 EUR/liter | Fuel density: 0.8000 kg/liter |

Maximum tankering possible **7324 kg** (limited by tank capacity).

Tankering **5500 kg** extra fuel saves **EUR 12.78**

| Tankered fuel | Block fuel | Takeoff weight | Landing weight | Trip fuel | Surplus burn | Savings |
| --- | --- | --- | --- | --- | --- | --- |
| 0 kg | 10000 kg | 49700 kg | 45929 kg | 3771 kg | 0 kg | EUR 0.00 |
| 500 kg | 10500 kg | 50200 kg | 46405 kg | 3795 kg | 24 kg | EUR 1.05 |
| 1000 kg | 11000 kg | 50700 kg | 46882 kg | 3818 kg | 47 kg | EUR 2.30 |
| 1500 kg | 11500 kg | 51200 kg | 47359 kg | 3841 kg | 70 kg | EUR 3.56 |
| 2000 kg | 12000 kg | 51700 kg | 47837 kg | 3863 kg | 93 kg | EUR 4.82 |
| 2500 kg | 12500 kg | 52200 kg | 48314 kg | 3886 kg | 115 kg | EUR 6.07 |
| 3000 kg | 13000 kg | 52700 kg | 48791 kg | 3909 kg | 138 kg | EUR 7.33 |
| 3500 kg | 13500 kg | 53200 kg | 49268 kg | 3932 kg | 161 kg | EUR 8.59 |
| 4000 kg | 14000 kg | 53700 kg | 49745 kg | 3955 kg | 184 kg | EUR 9.85 |
| 4500 kg | 14500 kg | 54200 kg | 50222 kg | 3978 kg | 207 kg | EUR 11.10 |
| 5000 kg | 15000 kg | 54700 kg | 50700 kg | 4000 kg | 230 kg | EUR 12.36 |
| **5500 kg** | **15500 kg** | **55200 kg** | **51171 kg** | **4029 kg** | **258 kg** | **EUR 12.78** |
| 6000 kg | 16000 kg | 55700 kg | 51635 kg | 4065 kg | 294 kg | EUR 11.94 |
| 6500 kg | 16500 kg | 56200 kg | 52099 kg | 4101 kg | 331 kg | EUR 11.10 |
| 7000 kg | 17000 kg | 56700 kg | 52562 kg | 4138 kg | 367 kg | EUR 10.26 |
| 7324 kg | 17324 kg | 57024 kg | 52863 kg | 4161 kg | 390 kg | EUR 9.71 |

E

C

S

Figure 5

| D-ABCD | Select aircraft! | Show database | Options | Admin | Help |

## Input data for D-ABCD:

From: LGAV    MTOW: 60000 kg    Block fuel this leg: 8000 kg

To: LIPE    MLW: 56200 kg    Block fuel next leg: 14000 kg

Wind: 300 °/ 40 kts    ZFW: 50000 kg    Taxi fuel: 300 kg

Calculate!

## Tankering analysis

$E_{max}$

16

Demo Airlines/D-ABCD/734

| From | To | |
| --- | --- | --- |
| LGAV/ATH | LIPE/BLQ | Greatcircle bearing/distance: 309°T/693.3 nm |
| Athens | Bologna | Wind component: -40 kts |
| N3756.2 E02356.7 | N4431.9 E01117.6 | Air distance: 771.9 nm |
| 0.1820 EUR/liter | 0.2261 EUR/liter | Performance profile: Climb 280/.74; Cruise Optimum altitude/LRC/.74; Descent .74/250 |
| | | Fuel density: 0.8000 kg/liter |

Maximum tankering possible **2300 kg** (limited by maximum takeoff weight).

Tankering **2300 kg** extra fuel saves **EUR 44.21**

| Tankered fuel | Block fuel | Takeoff weight | Landing weight | Trip fuel | Surplus burn | Savings |
| --- | --- | --- | --- | --- | --- | --- |
| 0 kg | 8000 kg | 57700 kg | 52870 kg | 4830 kg | 0 kg | EUR 0.00 |
| 200 kg | 8200 kg | 57900 kg | 53052 kg | 4848 kg | 18 kg | EUR 3.84 |
| 400 kg | 8400 kg | 58100 kg | 53235 kg | 4865 kg | 36 kg | EUR 7.69 |
| 600 kg | 8600 kg | 58300 kg | 53417 kg | 4883 kg | 53 kg | EUR 11.53 |
| 800 kg | 8800 kg | 58500 kg | 53599 kg | 4901 kg | 71 kg | EUR 15.38 |
| 1000 kg | 9000 kg | 58700 kg | 53781 kg | 4919 kg | 89 kg | EUR 19.22 |
| 1200 kg | 9200 kg | 58900 kg | 53964 kg | 4936 kg | 107 kg | EUR 23.07 |
| 1400 kg | 9400 kg | 59100 kg | 54146 kg | 4954 kg | 124 kg | EUR 26.91 |
| 1600 kg | 9600 kg | 59300 kg | 54328 kg | 4972 kg | 142 kg | EUR 30.75 |
| 1800 kg | 9800 kg | 59500 kg | 54510 kg | 4990 kg | 160 kg | EUR 34.60 |
| 2000 kg | 10000 kg | 59700 kg | 54693 kg | 5007 kg | 178 kg | EUR 38.44 |
| 2200 kg | 10200 kg | 59900 kg | 54875 kg | 5025 kg | 195 kg | EUR 42.29 |
| 2300 kg | 10300 kg | 60000 kg | 54966 kg | 5034 kg | 204 kg | EUR 44.21 |

E

C

S

Figure 6

| D-ABCD | Select aircraft! | Show database | Options | Admin | Help |

## Input data for D-ABCD:

From: `LGAV`  MTOW: `65000` kg  Block fuel this leg: `5000` kg

To: `LGSR`  MLW: `56200` kg  Block fuel next leg: `10000` kg

Wind: `000`,`0` kts  ZFW: `50000` kg  Taxi fuel: `300` kg

Calculate!

## Tankering analysis

$E_{max}$

16

Demo Airlines/D-ABCD/734

| From | To | |
|------|-----|---|
| LGAV/ATH | LGSR/JTR | Greatcircle bearing/distance: 141°T/117.8 nm |
| Athens | Santorini | Wind component: 0 kts |
| N3756.2 E02356.7 | N3624.1 E0252?.8 | Air distance: 117.8 nm |
| 0.1820 EUR/liter | 0.2706 EUR/ter | Performance profile: Climb 280/.74; Cruise Optimum altitude/LRC/.74; Descent .74/250 |
| | | Fuel density: 0.8000 kg/liter |

Maximum tankering possible **2760 kg** (limited by maximum landing weight).

Tankering **2760 kg** extra fuel saves **EUR 186.46**

| Tankered fuel | Block fuel | Takeoff weight | Landing weight | Trip fuel | Surplus burn | Savings |
|---------------|------------|----------------|----------------|-----------|--------------|---------|
| 0 kg | 5000 kg | 54700 kg | 53482 kg | 1218 kg | 0 kg | EUR 0.00 |
| 200 kg | 5200 kg | 54900 kg | 53679 kg | 1221 kg | 3 kg | EUR 13.50 |
| 400 kg | 5400 kg | 55100 kg | 53876 kg | 1224 kg | 6 kg | EUR 27.00 |
| 600 kg | 5600 kg | 55300 kg | 54073 kg | 1227 kg | 9 kg | EUR 40.52 |
| 800 kg | 5800 kg | 55500 kg | 54270 kg | 1230 kg | 12 kg | EUR 54.03 |
| 1000 kg | 6000 kg | 55700 kg | 54467 kg | 1233 kg | 15 kg | EUR 67.54 |
| 1200 kg | 6200 kg | 55900 kg | 54664 kg | 1236 kg | 18 kg | EUR 81.06 |
| 1400 kg | 6400 kg | 56100 kg | 54861 kg | 1239 kg | 22 kg | EUR 94.57 |
| 1600 kg | 6600 kg | 56300 kg | 55057 kg | 1243 kg | 25 kg | EUR 108.08 |
| 1800 kg | 6800 kg | 56500 kg | 55254 kg | 1246 kg | 28 kg | EUR 121.60 |
| 2000 kg | 7000 kg | 56700 kg | 55451 kg | 1249 kg | 31 kg | EUR 135.11 |
| 2200 kg | 7200 kg | 56900 kg | 55648 kg | 1252 kg | 34 kg | EUR 148.62 |
| 2400 kg | 7400 kg | 57100 kg | 55845 kg | 1255 kg | 37 kg | EUR 162.14 |
| 2600 kg | 7600 kg | 57300 kg | 56042 kg | 1258 kg | 40 kg | EUR 175.65 |
| **2760 kg** | **7760 kg** | **57460 kg** | **56200 kg** | **1260 kg** | **42 kg** | **EUR 186.46** |

E

C

S

Figure 7

| D-ABCD | Select aircraft! | Show database | Options | Admin | Help |

## Input data for D-ABCD:

From: LGAV   MTOW: 65000 kg   Block fuel this leg: 5000 kg

To: LGSR   MLW: 56200 kg   Block fuel next leg: 10000 kg

Wind: 000 ° / 0 kts   ZFW: 40000 kg   Taxi fuel: 300 kg

Calculate!

## Tankering analysis

E_max     16

Demo Airlines/D-ABCD/734

| From | To | |
|---|---|---|
| **From** | **To** | Greatcircle bearing/distance: 141°T/117.8 nm |
| LGAV/ATH | LGSR/JTR | Wind component: 0 kts |
| Athens | Santorini | Air distance: 117.8 nm |
| N3756.2 E02356.7 | N3624.1 E02528.8 | Performance profile: Climb 280/.74; Cruise Optimum altitude/LRC/.74; Descent .74/250 |
| 0.1820 EUR/liter | 0.2706 EUR/liter | Fuel density: 0.8000 kg/liter |

Maximum tankering possible **6157 kg** (limited by next flight fuel requirement).

Tankering **6157 kg** extra fuel saves **EUR 420.61**

| Tankered fuel | Block fuel | Takeoff weight | Landing weight | Trip fuel | Surplus burn | Savings |
|---|---|---|---|---|---|---|
| 0 kg | 5000 kg | 44700 kg | 43615 kg | 1085 kg | 0 kg | EUR 0.00 |
| 500 kg | 5500 kg | 45200 kg | 44109 kg | 1091 kg | 6 kg | EUR 34.09 |
| 1000 kg | 6000 kg | 45700 kg | 44604 kg | 1096 kg | 12 kg | EUR 68.33 |
| 1500 kg | 6500 kg | 46200 kg | 45098 kg | 1102 kg | 17 kg | EUR 102.57 |
| 2000 kg | 7000 kg | 46700 kg | 45592 kg | 1108 kg | 23 kg | EUR 136.80 |
| 2500 kg | 7500 kg | 47200 kg | 46087 kg | 1113 kg | 28 kg | EUR 171.04 |
| 3000 kg | 8000 kg | 47700 kg | 46581 kg | 1119 kg | 34 kg | EUR 205.28 |
| 3500 kg | 8500 kg | 48200 kg | 47076 kg | 1124 kg | 40 kg | EUR 239.52 |
| 4000 kg | 9000 kg | 48700 kg | 47570 kg | 1130 kg | 45 kg | EUR 273.75 |
| 4500 kg | 9500 kg | 49200 kg | 48065 kg | 1135 kg | 51 kg | EUR 307.99 |
| 5000 kg | 10000 kg | 49700 kg | 48559 kg | 1141 kg | 56 kg | EUR 342.23 |
| 5500 kg | 10500 kg | 50200 kg | 49053 kg | 1147 kg | 63 kg | EUR 376.27 |
| 6000 kg | 11000 kg | 50700 kg | 49545 kg | 1155 kg | 71 kg | EUR 410.01 |
| 6157 kg | 11157 kg | 50857 kg | 49699 kg | 1158 kg | 73 kg | EUR 420.61 |

E     C     S

Figure 8

## B737-400 Trip fuel [kg]

Flight profile: Climb 280/.74; Cruise optimum altitude/LRC/.74; Descent .74/250
TOW [kg] vs distance [nautical miles]

|       | 50  | 100  | 200  | 300  | 400  | 500  | 1000 | 1500 | 2000  |
|-------|-----|------|------|------|------|------|------|------|-------|
| 70000 | 988 | 1331 | 2047 | 2788 | 3491 | 4170 | 7500 | 9300 | 13100 |
| 65000 | 930 | 1260 | 1931 | 2571 | 3208 | 3832 | 6800 | 9600 | 12400 |
| 60000 | 860 | 1183 | 1837 | 2369 | 2952 | 3524 | 6300 | 8900 | 11500 |
| 55000 | 810 | 1112 | 1735 | 2209 | 2740 | 3267 | 5700 | 8200 | 10600 |
| 50000 | 750 | 1040 | 1627 | 2070 | 2573 | 3069 | 5400 | 7600 | 9800  |
| 45000 | 730 | 988  | 1555 | 1942 | 2427 | 2885 | 5000 | 7000 | 9200  |
| 40000 | 690 | 925  | 1471 | 1814 | 2282 | 2718 |      |      |       |
| 35000 | 630 | 839  | 1346 | 1667 | 2070 | 2463 |      |      |       |

Figure 9

**EP 1 595 789 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6484088 B1
- US 4159088 A
- US 4809174 A